# EUROPÄISCHE PATENTSCHRIFT

(11) **EP 1 013 847 B1**
(45) Veröffentlichungstag und Bekanntmachung des Hinweises auf die Patenterteilung: **29.09.2004**
(21) Anmeldenummer: 98124677.0
(22) Anmeldetag: 24.12.1998
(51) Int. Cl.: E04F 15/18, E04F 15/02, B32B 7/06

(54) **Dämmplatte für Fussbodenheizungen**
Insulating panel for floor heating systems
Panneaux isolants pour chauffages par le sol

(43) Veröffentlichungstag der Anmeldung: 28.06.2000
(73) Patentinhaber: Roth Werke GmbH, 35232 Dautphetal (DE)
(72) Erfinder:
(74) Vertreter: Albrecht, Rainer Harald, Dr.-Ing.

(56) Entgegenhaltungen:
- DE-A- 3 346 186
- DE-U- 8 134 009
- US-A- 3 111 787
- US-A- 4 386 981

## Beschreibung

Die Erfindung betrifft eine Dämmplatte für Fußbodenheizungen mit
einer Unterschicht aus aufgeschäumtem Kunststoff und
einer mit der Unterschicht verklebten Auflage aus einer steifen Folie, die an mindestens einer Plattenlängsseite und einer Plattenstirnseite der im Grundriss rechteckigen Dämmplatte mit der Unterschicht bündig abschließt,
wobei ein Randstreifen der Auflage an mindestens einem Rand der Dämmplatte über die Außenkante der Unterschicht vorsteht und wobei der vorstehende Randstreifen im Zuge der Auslegung eines Bodens mit der Auflage benachbarter Dämmplatten verklebbar ist.

Bei dem aus DE-U 81 34 009 bekannten Stand der Technik, von dem die Erfindung ausgeht, ist der vorstehende Randstreifen unterseitig mit einer dauerklebrigen Beschichtung in Form eines Haftklebstoffes versehen. Es besteht die Gefahr, dass der mit einem Überstand von einigen Zentimetern vorstehende Randstreifen an Seitenflächen der Unterschicht angedrückt wird und mit dieser verklebt. Es besteht die weitere Gefahr, dass die dauerklebrige Beschichtung verschmutzt und die Wirkung des Haftklebers vor der Verlegung der Dämmplatte mehr oder weniger verloren geht. Um eine funktionsgerechte Verlegung der Dämmplatten auf der Baustelle sicherzustellen, ist eine Kartonverpackung erforderlich. Stapel aus quadratischen oder rechteckförmigen Platten werden in formstabilen Kartons abgepackt, deren Grundfläche so groß ist, dass die vorstehenden Randstreifen der Dämmplatten nicht umgeknickt werden und eine Berührung der Klebeflächen mit anderen Flächen weitgehend ausgeschlossen ist. Die für den Transport zur Baustelle und für das Handling der Dämmplatten auf der Baustelle vor der Verlegung erforderliche Kartonverpackung ist aufwendig und teuer. Auch die Entsorgung der voluminösen Kartonagen auf der Baustelle ist in der Praxis störend.

Aus der Druckschrift US 4,386,981 ist eine Dachabdeckungsplatte bekannt, die aus einer Tragschicht, einer Schutzschicht und einer dazwischen liegenden selbstklebenden Bitumenschicht besteht. Die Schutzschicht weist eine Perforation auf, so dass Randstreifen entfernt werden können, um den hierdurch freigelegten Randbereich der selbstklebenden Bitumenschicht mit dem unterseitigen Randabschnitt einer zweiten Platte zu verbinden.

Der Erfindung liegt die Aufgabe zugrunde, Dämmplatten für Fußbodenheizungen anzugeben, die baustellengerecht handhabbar sind und mit einem Umreifungsband oder einer Folienverpackung zu Versandeinheiten zusammengefasst werden können, ohne dass die Gefahr einer Funktionsbeeinträchtigung besteht.

Ausgehend von einer Dämmplatte mit den eingangs beschriebenen Merkmalen wird die Aufgabe erfindungsgemäß dadurch gelöst, dass die Auflage entlang den Rändern, die mit der Unterschicht bündig abschließen, eine mit einem abziehbaren Schutzband abgedeckte Schicht aus einem dauerklebrigen Haftkleber trägt und dass der überstehende Randstreifen im Eckbereich zwischen der Plattenlängsseite und der Plattenstirnseite eingeschnitten ist, eine Ausklinkung aufweist oder durch eine Abreißperforation trennbar ist, so dass die der Plattenlängsseite und der Plattenstirnseite zugeordneten Randstreifenelemente auf die Auflage zurückfaltbar und/oder rechtwinklig gegen die Seitenwand der Unterschichten faltbar sind. Die dauerklebrige Schicht ist erfindungsgemäß an der Oberseite der Auflage angeordnet und durch ein Schutzband vor Schmutz und Feuchtigkeit geschützt. Durch die Unterschicht ist die dauerklebrige Schicht unterfüttert. Das erleichtert das Abziehen des Schutzbandes. Bei der Herstellung der Klebeverbindung kann ein ausreichender Anpressdruck aufgebracht werden.

Die erfindungsgemäße Dämmplatte kann als quadratische oder rechteckförmige Platte ausgebildet sein. Auch eine Ausführung als Rollenware ist möglich. Im Falle der Ausführung als Rollenware besitzt die Auflage eine Länge von mehreren Metern, wobei die Unterschicht in plattenförmige Sektionen unterteilt ist. Benachbarte Seitenkanten der Sektionen sind vorzugsweise schräg angeschnitten, so dass das Dämmelement mit der die Auflage bildenden Folie nach außen zu einer Rolle aufgewickelt werden kann.

Durch die erfindungsgemäße Anordnung ist eine ungewollte Verklebung des vorstehenden Randstreifens an Seitenflächen der Unterschicht während des Transports nicht mehr möglich. Auch eine Verschmutzung der Klebeflächen ist ausgeschlossen. Damit entfällt das Erfordernis einer aufwendigen Kartonagenverpackung und können erfindungsgemäße Dämmplatten mittels einer Folienverpackung, z. B. durch eine Schrumpffolie, zu Versandeinheiten zusammengefasst werden, wobei die vorstehenden Randstreifen sich an Seitenflächen der Unterschicht anlegen können. Im Rahmen der Erfindung liegt es auch, dass die Dämmplatten ohne jede Schutzhülle mit Umreifungsbändern zu Versandeinheiten zusammengefasst werden.

Bei der Auslegung einer an eine Wand angrenzenden Bodenfläche ist ein zur Wand vorstehender Randstreifen der aus einer steifen Folie bestehenden Auflage störend. Nach dem Stand der Technik wird der zur Wand hin vorstehende Randstreifen mit einem Messer abgeschnitten. Dieser Vorgang ist mühsam und mit einer Verletzungsgefahr verbunden. Mit der erfindungsgemäßen Dämmplatte ist hingegen eine wesentlich einfachere Handhabung möglich.

Zwischen dem mit der Unterschicht verklebten Abschnitt der Auflage und dem vorstehenden Randstreifen ist zweckmäßig eine Schwächungslinie in Form einer Rillung angeordnet. Bei der erfindungsgemäßen Ausführung kann der Überstand umgelegt werden, ohne dass die Gefahr besteht, dass sich das Dämmelement aufgrund einer Rückfederung des aus einer steifen Folie bestehenden Randstreifens von der Wandfläche abdrückt und einen unerwünschten Spalt bildet, in den Estrich unter Bildung von Schall- und Wärmebrücken eindringen kann. Gemäß einer anderen Ausführung ist der vorstehende Randstreifen mit einer Abreißperforation an dem mit der Unterschicht verklebten Abschnitt der Auflage angeschlossen. Mit der Abreißperforation hat der Anwender die Möglichkeit, den vorstehenden Randstreifen in der beschriebenen Weise umzufalten oder als Alternative ohne Messer abzutrennen.

Die Möglichkeit, dass der Überstand der Auflage begünstigt durch eine Schwächungslinie in Form einer Rillung oder einer Abreißperforation auf die Oberseite der Auflage zurückgefaltet werden kann, kann bei der Bildung von Versandeinheiten genutzt werden. So entstehen Stapel mit einer kleineren Grundfläche und einem kleineren Volumen, wenn die Dämmplatten mit auf die Oberseite zurückgefalteten Randstreifenabschnitten gestapelt werden. Die Dämmplatten können im Stapel so angeordnet werden, daß die zurückgefalteten Randstreifen in gleichmäßiger Verteilung am Umfang des Stapels angeordnet sind und dadurch eine gerade Stapelbildung gewährleistet ist.

In weiterer Ausgestaltung lehrt die Erfindung, daß die Auflage der Dämmplatte einen Zusatzstreifen aus dauerklebrigem Haftkleber aufweist, der auflagenoberseitig unmittelbar neben dem vorstehenden Randstreifen angeordnet und von einem abziehbaren Schutzband abgedeckt ist. Die Ausführung vereinfacht die ordnungsgemäße Verbindung der Dämmplatte mit einem Randdämmstreifen. Der Randdämmstreifen besteht aus einem flexiblen Band aus geschäumtem Kunststoff, dessen Breite an die Höhe des Bodenaufbaus angepaßt ist. Er wird zur Vermeidung von Schall- und Wärmebrücken als Sockel an der Wand angebracht. An den Randdämmstreifen ist eine z. B. aus Polyäthylen bestehende Folie angeschweißt, die den Randfugenbereich zwischen dem Randdämmstreifen und der wandseitig verlegten Dämmplatte abdecken und das Eindringen von Estrich verhindern soll. Bei Verwendung einer erfindungsgemäßen Dämmplatte wird das Schutzband des dauerklebrigen Zusatzstreifens abgezogen und wird die an den Randdämmstreifen angeschweißte Folie an den Zusatzstreifen angedrückt und dadurch mit der Bodendämmplatte verklebt.

Um das Greifen und Abziehen des Schutzbandes bzw. des Zusatzstreifens zu erleichtern, ist zweckmäßig mindestens ein griffseitiges Ende des Schutzbandes nicht mit der Auflage verklebt.

Im folgenden wird die Erfindung anhand einer lediglich ein Ausführungsbeispiel darstellenden Zeichnung erläutert. Es zeigen schematisch, jeweils in perspektivischer Darstellung,
- Fig. 1 bis 3: erfindungsgemäße Dämmplatten für Fußbodenheizungen in verschiedenen Ausführungen,
- Fig. 4: einen versandfertigen Stapel aus erfindungsgemäßen Dämmplatten.

Die in den Figuren dargestellten Dämmplatten bestehen in ihrem grundsätzlichen Aufbau aus einer Unterschicht 1 aus aufgeschäumtem Kunststoff, z. B. Polystyrol oder Polyurethan, und einer mit der Unterschicht verklebten Auflage 2 aus einer steifen Folie. Die Unterschicht 1 weist eine für eine Wärme- und Trittschalldämmung ausreichende Dicke auf. Die Auflage 2 kann aus einer Kunststoffolie (PVC, PS, HDPE), Papier, Gewebe und dergleichen bestehen und besitzt zumeist eine Dicke von 0,15 bis 0,3 mm. Sie ist reißfest und verhältnismäßig steif.

Die Dämmplatten bilden den Untergrund für die Verlegung von Heizrohren einer Fußbodenheizung. Die Heizrohre werden mittels Rohrhalter, die in die Auflage 2 der Dämmplatte eingestoßen werden, auf den Dämmplatten fixiert. Die Stoßfugen zwischen den Dämmplatten müssen überdeckt werden, um zu verhindern, daß Feuchtigkeit und Estrich eindringen und Schall- und Wärmebrücken entstehen können. Zur Fugenabdeckung dient ein Randstreifen 3 der Auflage 2, der jeweils an einer Plattenlängsseite und an einer Plattenstirnseite über die Außenkante der Unterschicht vorsteht und im Zuge der Auslegung eines Bodens mit der Auflage benachbarter Dämmplatten verklebbar ist. Die beiden anderen Ränder der Auflage 2 schließen bündig mit der Unterschicht 1 der Dämmplatte ab.

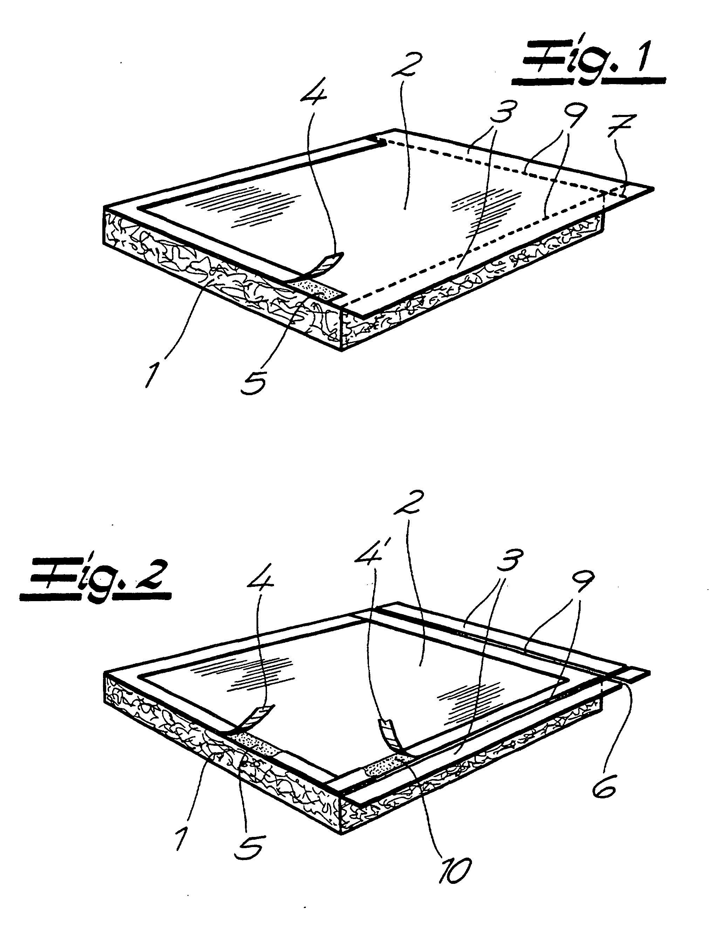

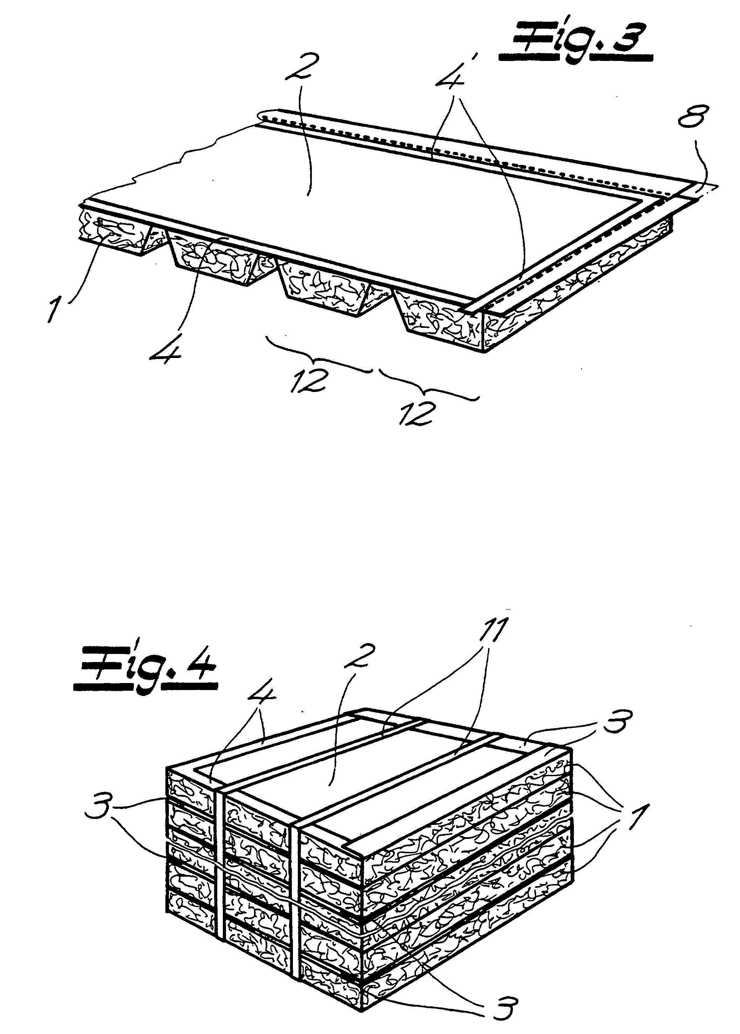

Den Figuren entnimmt man, daß die aus einer steifen Folie bestehende Auflage 2 entlang den Rändern, die mit der Unterschicht 1 bündig abschließen, eine mit einem abziehbaren Schutzband 4 abgedeckte Schicht 5 aus einem dauerklebrigen Haftkleber trägt. Geeignete Haftklebstoffe sind z. B. als dauerklebrige Beschichtung von Bändern, Folien und Etiketten bekannt und bestehen im allgemeinen aus Natur- und Synthesekautschuken in Verbindung mit modifizierten Naturharzen und/oder synthetischen Harzen (Ullmanns Encyklopädie der technischen Chemie, Band 14, Seiten 258 bis 260). In Fig. 1 ist angedeutet, daß ein griffseitiges Ende des Schutzbandes 4 bezogen auf den Haftgrund übersteht und nicht mit der Auflage 2 verklebt ist. Dies erleichtert das Greifen und Abziehen des Schutzbandes. In Fig. 3 ist angedeutet, daß das Schutzband 4' gut greifbar an einer Seite, an der die Auflage 2 und die Unterschicht 1 bündig abschließen, übersteht.

Der überstehende Randstreifen 3 ist im Eckbereich zwischen der Plattenlängsseite und der Plattenstirnseite eingeschnitten (Trennschnitt 6 in Fig. 2) oder durch eine Abreißperforation 7 trennbar (Fig. 1) oder weist eine Ausklinkung 8 (Fig. 3) auf. Zwischen dem mit der Unterschicht 1 verklebten Abschnitt der Auflage 2 und dem vorstehenden Randstreifen 3 ist eine Schwächungslinie 9 angeordnet, die bei der in Fig. 2 dargestellten Ausführung als Rillung ausgebildet ist und bei der in Fig. 1 dargestellten Ausführung aus einer Abreißperforation besteht. Entlang der Schwächungslinie 9 sind die der Plattenlängsseite und der Plattenstirnseite zugeordneten Abschnitte des Randstreifens 3 auf die Auflage 2 zurückfältbar und/oder rechtwinklig gegen die Seitenwand der Unterschicht 1 faltbar.

Bei der in Fig. 2 dargestellten Ausführung der Erfindung ist zusätzlich zu der Haftkleberschicht 5, die entlang den mit der Unterschicht 1 bündig abschließenden Rändern der Auflage 2 angeordnet ist, ein Zusatzstreifen 10 aus dauerklebrigem Haftkleber vorgesehen, der auflagenoberseitig unmittelbar neben dem vorstehenden Randstreifen 3 angeordnet und ebenfalls von einem abziehbaren Schutzband 4' abgedeckt ist.

In der Fig. 4 ist eine Versandeinheit aus mehreren, übereinandergestapelten Dämmplatten dargestellt. Der vorstehende Randstreifen 3 der Dämmplatten ist auf die Oberseite der jeweiligen Dämmplatte zurückgefaltet. Die Dämmplatten sind im Stapel versetzt angeordnet, um eine Schieflage im Stapel zu vermeiden. Der Stapel ist durch Umreifungsbänder 11 geschlossen. Die Versandeinheit bedarf keiner Schutzumhüllung.

Bei den in den Fig. 1 und 2 dargestellten Ausführungen der erfindungsgemäßen Dämmplatte besitzt die Unterschicht einen quadratischen oder rechteckförmigen Grundriß. Die erfindungsgemäße Dämmplatte kann auch als Rollenware vorliegen (Fig. 3). Im Falle einer Rollenware ist die Unterschicht 1 in Sektionen 12 unterteilt, wobei die einander benachbarten Flächen schräg angeschnitten sind. Die in der Fig. 3 dargestellte Dämmplatte kann mit der Auflage 2 nach außen zu einer Rolle aufgewickelt werden.

## Patentansprüche

1. Dämmplatte für Fußbodenheizungen mit einer Unterschicht (1) aus aufgeschäumtem Kunststoff und mit einer mit der Unterschicht (1) verklebten Auflage (2) aus einer steifen Folie, die an mindestens einer Plattenlängsseite und einer Plattenstirnseite der im Grundriss rechteckigen Dämmplatte mit der Unterschicht (1) bündig abschließt, wobei ein Randstreifen (3) der Auflage (2) an mindestens einem Rand der Dämmplatte über die Außenkante der Unterschicht (1) vorsteht und wobei der vorstehende Randstreifen (3) im Zuge der Auslegung eines Bodens mit der Auflage benachbarter Dämmplatten verklebbar ist, **dadurch gekennzeichnet, dass** die Auflage (2) entlang den Rändern, die mit der Unterschicht (1) bündig abschließen, eine mit einem abziehbaren Schutzband (4) abgedeckte Schicht (5) aus einem dauerklebrigen Haftkleber trägt und dass der überstehende Randstreifen (3) im Eckbereich zwischen der Plattenlängsseite und der Plattenstirnseite eingeschnitten ist, eine Ausklinkung (8) aufweist oder durch eine Abreißperforation (7) trennbar ist, so dass die der Plattenlängsseite und der Plattenstirnseite zugeordneten Randstreifenelemente auf die Auflage (2) zurückfaltbar und/oder rechtwinklig gegen die Seitenwand der Unterschichten (1) faltbar sind.

2. Dämmplatte nach Anspruch 1, **dadurch gekennzeichnet, dass** zwischen dem mit der Unterschicht (1) verklebten Abschnitt der Auflage (2) und dem vorstehenden Randstreifen (3) eine Schwächungslinie (9) in Form einer Rillung angeordnet ist.

3. Dämmplatte nach Anspruch 1, **dadurch gekennzeichnet, dass** der vorstehende Randstreifen (3) mit einer Abreißperforation an dem mit der Unterschicht (1) verklebten Abschnitt der Auflage (2) angeschlossen ist.

4. Dämmplatte nach einem der Ansprüche 1 bis 3, **dadurch gekennzeichnet, dass** die Auflage (2) einen Zusatzstreifen (10) aus dauerklebrigem Haftkleber aufweist, der auflagenoberseitig unmittelbar neben dem vorstehenden Randstreifen (3) angeordnet und von einem abziehbaren Schutzband (4') abgedeckt ist.

5. Dämmplatte nach einem der Ansprüche 1 bis 4, **dadurch gekennzeichnet, dass** mindestens ein griffseitiges Ende des Schutzbandes (4, 4') nicht mit der Auflage (2) verklebt ist.

## Claims

1. Insulation panel for floor heating systems, with an undercoating (1) made of foamed plastic and with a support (2) made from a rigid film adhered with the undercoating, which terminates flush at at least one plate longitudinal side and one plate front side of the rectangular insulation panel with the undercoating (1), whereby an edge strip (3) of the support (2) protrudes at at least one edge of the insulation panel over the outer edge of the undercoating (1), and whereby the protruding edge strip (3) can be adhered in the course of the designing of a floor with the insulation panel adjacent the support,
**characterized in that** the support (2) supports a layer (5) made from a permanently-adhesive, pressure-sensitive adhesive covered with a removable protective band (4) along the edges, which terminates flush with the undercoating (1) and that the projecting edge strip is incised in a corner region between the plate longitudinal side and the plate front side, has a notch (8), or is separable by means of a tear perforation (7), so that the edge strip elements associated with the plate longitudinal side and the plate front side can be folded back on the support (2) and/or can be folded at a right angle against the side wall of the under coating (1).

2. Insulation panel according to claim 1, **characterized in that** between the section of the support (2) adhered to the undercoating (1) and the protruding edge strip (3), a weakening line (9) in the form of a crease is arranged.

3. Insulation panel according to claim 1, **characterized in that** the protruding edge strip (3) is connected with a tear perforation on the section of the support (2) adhered with the undercoating (1).

4. Insulation panel according to one of claims 1 through 3, **characterized in that** the support (2) has a supplementary strip (10) made from a long-lasting adhesive pressure-sensitive adhesive, which is arranged on the support-upper side directly near the protruding edge strip (3) and is covered by a removable protective band (4').

5. Insulation panel according to one of claims 1 through 4, **characterized in that** at least one handle-sided end of the protective band (4, 4') is not adhered to the support (2).

## Revendications

1. Panneau isolant pour chauffages par le sol avec une couche inférieure (1) en matériau synthétique en mousse et avec un revêtement (2) collé avec la couche inférieure (1) en une feuille rigide qui se termine en affleurement avec la couche inférieure (1) sur au moins un côté longitudinal du panneau et un côté frontal du panneau isolant rectangulaire en plan, une bande de bordure (3) du revêtement (2) faisant saillie sur au moins un bord du panneau isolant au-delà de l'arête extérieure de la couche inférieure (1) et la bande de bordure saillante (3) étant collable au cours de la pose d'un sol avec les panneaux isolants voisins du revêtement,
**caractérisée en ce que** le revêtement (2) porte une couche (5) en adhésif permanent recouverte d'une bande de protection amovible (4) le long des bords qui se terminent en affleurement avec la couche inférieure (1) et **en ce que** la bande de bordure saillante (3) est entaillée dans la région de coin entre le côté longitudinal du panneau et le côté frontal du panneau, présente une encoche (8) ou est détachable par une perforation de rupture (7) de sorte que les éléments de la bande de bordure associés au côté longitudinal du panneau et au côté frontal du panneau sont repliables sur le revêtement (2) et/ou pliables à angle droit contre la paroi latérale des couches inférieures (1).

2. Panneau isolant selon la revendication 1, **caractérisée en ce qu'**une ligne d'affaiblissement (9) sous la forme d'une rainure est disposée entre la portion collée avec la couche inférieure (1) du revêtement (2) et la bande de bordure saillante (3).

3. Panneau isolant selon la revendication 1, **caractérisée en ce que** la bande de bordure saillante (3) est raccordée à une perforation de rupture sur la portion collée avec la couche inférieure (1) du revêtement (2).

4. Panneau isolant selon l'une quelconque des revendications 1 à 3, **caractérisée en ce que** le revêtement (2) présente une bande supplémentaire (10) en adhésif permanent qui est disposée sur le côté supérieur du revêtement directement à côté de la bande de bordure saillante (3) et est recouverte par une bande de protection amovible (4').

5. Panneau isolant selon l'une quelconque des revendications 1 à 4, **caractérisée en ce qu'**au moins une extrémité du côté de la poignée de la bande de protection (4, 4') n'est pas collée avec le revêtement (2).
